# EUROPÄISCHE PATENTSCHRIFT

(11) **EP 3 310 451 B1**
(45) Veröffentlichungstag und Bekanntmachung des Hinweises auf die Patenterteilung: **19.06.2019**
(21) Anmeldenummer: 17706712.1
(22) Anmeldetag: 20.02.2017
(51) Int. Cl.: B01D 19/04, C11D 3/00, C11D 3/37, C11D 3/16, C11D 3/12, C08L 83/04

(54) **ENTSCHÄUMERZUSAMMENSETZUNGEN FÜR WASCHMITTEL**
DEFOAMING COMPOSITIONS FOR DETERGENTS
COMPOSITIONS ANTI-MOUSSE POUR DÉTERGENTS

(30) Priorität: 01.03.2016 DE 102016203346
(43) Veröffentlichungstag der Anmeldung: 25.04.2018
(73) Patentinhaber: Wacker Chemie AG, 81737 München (DE)
(72) Erfinder: BREHM, Christof, 84489 Burghausen (DE); BECKER, Richard, Ann Arbor, Michigan 48103 (US); RAUTSCHEK, Holger, 01612 Nünchritz (DE)
(74) Vertreter: Deffner-Lehner, Maria
(86) Internationale Anmeldenummer: PCT/EP2017/053747
(87) Internationale Veröffentlichungsnummer: WO 2017/148723

(56) Entgegenhaltungen:
- WO-A1-2006/018145
- WO-A1-2014/066308
- WO-A1-2014/066309
- WO-A1-2015/022165
- US-A1- 2011 209 291

## Beschreibung

Die Erfindung betrifft Entschäumerzusammensetzungen, enthaltend Organosiliziumverbindungen mit SiC-gebundenen aromatischen Kohlenwasserstoffresten, sowie deren Verwendung zum Entschäumen von Medien, vorzugsweise wässrigen Medien, insbesondere wässrigen Tensidformulierungen.

In vielen flüssigen, insbesondere wässrigen Systemen, die als erwünschte oder auch unerwünschte Bestandteile oberflächenaktive Verbindungen enthalten, können durch Schaumbildung Probleme auftreten, wenn diese Systeme in mehr oder weniger intensivem Kontakt mit gasförmigen Stoffen gebracht werden, beispielsweise beim Begasen von Abwässern, beim intensiven Rühren von Flüssigkeiten, bei Destillations-, Wasch- oder Färbeprozessen oder bei Abfüllvorgängen.

Die Bekämpfung dieses Schaumes kann auf mechanischem Wege oder durch den Zusatz von Entschäumern erfolgen. Dabei haben sich Entschäumer auf Siloxanbasis besonders bewährt. Entschäumer auf Basis von Siloxanen werden beispielsweise nach DE-AS 15 19 987 durch Erhitzen von hydrophiler Kieselsäure in Polydimethylsiloxanen hergestellt.

In stark schäumenden, tensidreichen Systemen weisen Polydimethylsiloxan-basierte Entschäumerformulierungen jedoch nicht immer eine ausreichend lang anhaltende Wirksamkeit auf. Wegen ihrer hohen Viskositäten, die aufgrund von Verzweigungen oder Vernetzungen vorliegen, sind sie häufig schwer handhabbar. Diesem Umstand wurde durch die Einführung funktionalisierter Polysiloxane als Basis von Entschäumerformulierungen entgegengewirkt. Funktionalisierungen können entweder Arylalkyl-Funktionalitäten (wie in EP 1 075 864 A2 oder EP 1 075 863 A2 beschrieben) sowie n-Alkyl- oder Aryl-Funktionalitäten (wie in WO 2006/018145 A1 beschrieben) umfassen.

In WO 2006/018145 A1 sind Entschäumerzusammensetzungen beschrieben, die nur einen Typus an Phenylsiloxanen aufweisen.

Überraschenderweise wurde nun gefunden, dass Entschäumerzusammensetzungen, die auf zwei unterschiedlichen Arten von Phenylsiloxanen basieren, eine deutlich bessere Entschäumeraktivität aufweisen, als dies bei Entschäumerzusammensetzungen der Fall ist, die nur aus einer Art von Phenylsiloxanen bestehen.

Gegenstand der Erfindung sind somit Entschäumerzusammensetzungen enthaltend
(A1) Organosiliziumverbindungen enthaltend Einheiten der Formel

   Rₐ(R¹O)_{b}R²_{c}SiO_{(4-a-b-c)/2} (I),

   worin
   R gleich oder verschieden sein kann und ein Wasserstoffatom oder einen einwertigen, SiC-gebundenen, gegebenenfalls substituierten, aliphatischen oder über aliphatische Gruppen an das Siliziumatom gebundenen aromatischen Kohlenwasserstoffrest bedeutet,
   R¹ gleich oder verschieden sein kann und ein Wasserstoffatom oder einen einwertigen, gegebenenfalls substituierten Kohlenwasserstoffrest bedeutet,
   R² gleich oder verschieden sein kann und einen einwertigen, gegebenenfalls substituierten, aromatischen Kohlenwasserstoffrest, der über ein Ringkohlenstoffatom an das Siliziumatom angebunden ist, bedeutet,
   a 0, 1, 2 oder 3, vorzugsweise a 0, 1 oder 2, ist,
   b 0, 1, 2 oder 3 ist und
   c 0 oder 1 ist,
   mit der Maßgabe, dass
   - die Summe a+b+c kleiner oder gleich 3 ist,
   - in höchstens 80 %, vorzugsweise höchstens 70 %, bevorzugt höchstens 50 %, aller Einheiten der Formel (I) die Summe a+c gleich 2 ist
   - in mindestens 20%, vorzugsweise mindestens 30%, bevorzugt mindestens 40%, aller Einheiten der Formel (I) die Summe a+c gleich 1 ist und
   - in mehr als 10 %, vorzugsweise mehr als 20%, bevorzugt mehr als 40%, aller Einheiten der Formel (I) c gleich 1 ist, sowie vorzugsweise in höchstens 100 %, bevorzugt in höchstens 90%, besonders bevorzugt in höchstens 75%, aller Einheiten der Formel (I) c gleich 1 ist,
(A2) Organosiliziumverbindungen enthaltend Einheiten der Formel

   R_{a'}(R¹O)_{b'}R²_{c'}SiO_{(4-a'-b'-c')/2} (II),

   worin
   R, R¹ und R² die oben dafür angegebene Bedeutung haben,
   a' 0, 1, 2 oder 3 ist,
   b' 0, 1, 2 oder 3 ist und
   c' 0, 1, 2 oder 3 ist,
   mit der Maßgabe, dass
   - die Summe a'+b'+c' kleiner oder gleich 3 ist,
   - in mehr als 80 %, bevorzugt mehr als 90%, aller Einheiten der Formel (II) die Summe a'+c' gleich 2 ist,
   - in höchstens 10 %, bevorzugt höchstens 5%, aller Einheiten der Formel (II) die Summe a'+c' gleich 1 ist und,
   - in 1-100 %, vorzugsweise in 10-85 %, bevorzugt in 20-70 %, aller Einheiten der Formel (II) c' verschieden 0 ist,
(B) Zusatzstoffe
   ausgewählt aus
(B1) Füllstoffpartikeln und/oder
(B2) Organopolysiloxanharzen bestehend aus Einheiten der Formel

   R³_{d}(R⁴O)ₑSiO_{(4-d-e)/2} (III),

   worin
   R³ gleich oder verschieden sein kann und ein Wasserstoffatom oder einen einwertigen, gegebenenfalls substituierten, SiC-gebundenen Kohlenwasserstoffrest bedeutet,
   R⁴ gleich oder verschieden sein kann und ein Wasserstoffatom oder einen einwertigen, gegebenenfalls substituierten Kohlenwasserstoffrest bedeutet,
   d 0, 1, 2 oder 3 ist und
   e 0, 1, 2 oder 3 ist,
   mit der Maßgabe, dass die Summe d+e kleiner oder gleich 3 ist und in weniger als 50 % aller Einheiten der Formel (III) im Organopolysiloxanharz die Summe d+e gleich 2 ist, und gegebenenfalls
(B3) Organosiliziumverbindungen, welche verschieden von (A1) und (A2) sind und Einheiten der Formel

   R⁵_{g}(R⁶O)ₕSiO_{(4-g-h)/2} (IV),

   enthalten, worin
   R⁵ gleich oder verschieden sein kann und eine für R angegebene Bedeutung hat,
   R⁶ gleich oder verschieden sein kann und eine für R¹ angegebene Bedeutung hat,
   g 0, 1, 2 oder 3 ist und
   h 0, 1, 2 oder 3 ist,
   mit der Maßgabe, dass die Summe g+h kleiner oder gleich 3 ist und in mindestens 50 % aller Einheiten der Formel (IV) in der Organosiliziumverbindung die Summe g+h gleich 2 ist,
   gegebenenfalls
(C) polyethermodifizierte Siloxane,
   gegebenenfalls
(D) organische Verbindungen,
   gegebenenfalls
(E) Wasser und
   gegebenenfalls
(F) weitere Additive.

Für die vorliegende Erfindung ist es wesentlich, dass die Komponenten (A1) sowie (A2) aromatische Reste enthalten, die direkt an das Siliziumatom gebunden sind. Das heißt, dass es eine kovalente Bindung zwischen einem Siliziumatom in der Einheit der Formel (I) bzw. (II) und einem Kohlenstoffatom, welches zum aromatischen Ring gehört, gibt. Komponente (A2) ist beispielsweise in WO 2006/018145 A1 beschrieben.

Bevorzugt enthält die Organosiliziumverbindung (A1) Einheiten der Formel (I), worin in 0 bis 50%, bevorzugt in 0 bis 40%, besonders bevorzugt in 0%, aller Einheiten der Formel (I) a gleich 3 ist.

In einer bevorzugten Variante enthält die Organosiliziumverbindung (A2) Einheiten der Formel (II), worin in 1-15 %, bevorzugt in 1-10 % aller Einheiten der Formel (II) a' gleich 3 ist.

Die erfindungsgemäßen Entschäumerzusammensetzungen enthalten vorzugsweise 10-90 Gew.-%, bevorzugt 20-80 Gew.-%, besonders bevorzugt 25-75 Gew.-%, Organosiliziumverbindungen (A1), jeweils bezogen auf die Summe der Organosiliziumverbindungen (A1) und (A2).

Beispiele für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest; Alkenylreste, wie der Vinyl- und der Allylrest; Cycloalkylreste, wie Cyclopentyl-, Cyclohexyl-, Cycloheptylreste und Methylcyclohexylreste, über aliphatische Gruppen an das Siliziumatom gebundene aromatische Gruppen, wie der Benzylrest, Phenylethylrest oder der 2-Phenylpropylrest.

Beispiele für substituierte Reste R sind 3,3,3-Trifluor-n-propylrest, Cyanoethyl-, Glycidoxy-n-propyl-, Polyalkylenglycoln-propyl-, Amino-n-propyl-, Aminoethylamino-n-propyl- und Methacryloxy-n-propylreste.

Vorzugsweise handelt es sich beim Rest R um ein Wasserstoffatom oder um einen einwertigen, gegebenenfalls substituierten, aliphatischen Kohlenwasserstoffrest mit 1 bis 30 Kohlenstoffatomen, bevorzugt um einen einwertigen, aliphatischen Kohlenwasserstoffrest mit 1 bis 4 Kohlenstoffatomen, insbesondere um den Methylrest oder den n-Propylrest.

Vorzugsweise haben weniger als 1 Mol-%, insbesondere weniger als 0,5 Mol-%, der Reste R in den Komponenten (A1) und (A2) die Bedeutung von Wasserstoffatom.

Beispiele für Rest R¹ sind das Wasserstoffatom und die für Rest R und R² angegebenen Reste.

Vorzugsweise handelt es sich beim Rest R¹ um ein Wasserstoffatom oder um einen einwertigen, gegebenenfalls substituierten Kohlenwasserstoffrest mit 1 bis 30 Kohlenstoffatomen, bevorzugt um ein Wasserstoffatom oder einen einwertigen Kohlenwasserstoffrest mit 1 bis 4 Kohlenstoffatomen, insbesondere um Methyl-, Ethyl- oder Butylreste, wie z.B. den n-Butylrest. Beispiele für R² sind Arylreste, wie Phenyl-, Toloyl-, Xylyl-, Cumyl-, Naphtyl-, Anthracylreste.

Bevorzugt handelt es sich bei Rest R² um den Phenylrest.

Vorzugsweise sind 10 bis 100 Mol-%, bevorzugt 15 bis 100 Mol-%, besonders bevorzugt 20 bis 100 Mol-% der SiC-gebundenen Reste in den Komponenten (A1) und (A2) Reste R².

Im Rahmen der vorliegenden Erfindung sollen von dem Begriff Organopolysiloxane sowohl polymere, oligomere wie auch dimere Siloxane mitumfasst werden.

Die als Komponente (A1) eingesetzten Organosiliziumverbindungen enthaltend Einheiten der Formel (I) sind bevorzugt Siliconharze, die besonders bevorzugt aus Einheiten der Formel (I) bestehen.

Vorzugsweise werden als Komponente (A1) Siliconharze, die Einheiten der Formeln R²SiO_{3/2} und/oder R²(R¹O)SiO_{2/2} und/oder R²(R¹O)₂SiO_{1/2}, insbesondere Einheiten der Formeln PhSiO_{3/2} und/oder Ph(MeO)SiO_{2/2} und/oder Ph(MeO)₂SiO_{1/2}, enthalten, wobei R¹ und R² die oben dafür angegebenen Bedeutung haben und Me gleich Methylrest und Ph gleich Phenylrest bedeutet, eingesetzt.
Beispiele für Siliconharze (A1) sind solche der Formeln

(R²SiO_{3/2})ₖ(R₂SiO)ₗ,

(R²SiO_{3/2})ₖ(R₂SiO)ₗ(R²(R¹O)SiO_{2/2})ₘ,

(R²SiO_{3/2})ₖ(R₂SiO)ₗ(R²(R¹O)SiO_{2/2})ₘ(R²(R¹O)₂SiO_{1/2})ₙ

und

(R²SiO_{3/2})ₖ(R²(R¹O)SiO_{2/2})ₘ,

wobei sie zusätzlich Einheiten ausgewählt aus der Gruppe der Formeln R₃SiO_{1/2} und R₂(R¹O)SiO_{1/2}, und deren Mischungen,
vorzugsweise in Mengen von 0 bis 20 Mol-%, enthalten können, wobei R, R¹ und R² die oben dafür angegebene Bedeutung haben, R bevorzugt ein Methylrest oder ein n-Propylrest, R¹ bevorzugt ein Wasserstoffatom oder ein Methylrest und R² bevorzugt ein Phenylrest sind, und
die Koeffizienten k, l, m und n unabhängig voneinander Werte größer gleich 1 annehmen. Die Summe aus k+l+m+n bestimmt den Polymerisationsgrad und damit die Viskosität.

Die Organosiliziumverbindungen (A1) haben eine Viskosität von vorzugsweise mindestens 10 mPas, bevorzugt mindestens 20 mPas, besonders bevorzugt mindestens 30 mPas (jeweils gemessen bei 25°C und einem Schergefälle von 10/s) und von vorzugsweise höchstens 500 000 mPas (gemessen bei 25°C und einem Schergefälle von 1/s), bevorzugt höchstens 10 000 mPas, insbesondere höchstens 1 000 mPas (jeweils gemessen bei 25°C und einem Schergefälle von 10/s).

Die als Komponente (A2) eingesetzten Organosiliziumverbindungen enthaltend Einheiten der Formel (II) sind vorzugsweise Organopolysiloxane, die bevorzugt aus Einheiten der Formel (II) bestehen.

Bevorzugt sind die Organopolysiloxane (A2) weitgehend linear und es werden insbesondere Organopolysiloxane der Formel

R₃₋ₚ(R¹O)ₚSiO[R₂SiO]ᵥ[R*R²SiO]_{w}(R¹O)ₚR₃₋ₚ (V),

wobei die Organopolysiloxane der Formel (V) T-Einheiten ausgewählt aus Einheiten der Formeln R²SiO_{3/2}, RSiO_{3/2}, R²(R¹O)SiO_{2/2}, R(R¹O)SiO_{2/2}, R²(R¹O)₂SiO_{1/2}, R(R¹O)₂SiO_{1/2} und deren Mischungen in Mengen von 0 bis 5 Mol-% enthalten können,
wobei R, R¹ und R² die oben dafür angegebene Bedeutung haben,
R* R oder R², vorzugsweise R, bedeutet,
p 0 oder 1 ist,
v 0 oder eine ganze Zahl ist, vorzugsweise 0 oder 1 bis 1000, ist und
w eine ganze Zahl ist, vorzugsweise 1 bis 500, ist, eingesetzt.

Die Summe aus v+w bestimmt den Polymerisationsgrad und damit die Viskosität.

Beispiele für die Komponente (A2) sind solche, die eine oder mehrere Einheiten der Formeln Ph₃SiO_{1/2}, Ph₂MeSiO_{1/2}, PhMe₂SiO_{1/2}, Ph₂SiO_{2/2}, PhMeSiO_{2/2} und PhSiO_{3/2} enthalten, wobei Me gleich Methylrest und Ph gleich Phenylrest bedeutet, wie z.B. Organopolysiloxane der Formeln

Me₃SiO(Ph₂SiO)ₓ(Me₂SiO)_{z}SiMe₃,

Me₃SiO(PhMeSiO)_{y}(Me₂SiO)_{z}SiMe₃,

Me₃SiO(Ph₂SiO)ₓ(PhMeSiO)_{y}(Me₂SiO)_{z}SiMe₃

und

Me₃SiO(Ph₂SiO)ₓ(Me₂SiO)_{z}SiMe₃,

wobei die Organopolysiloxane Einheiten der Formel PhSiO_{3/2} in geringen Mengen, vorzugsweise in Mengen von 0 bis 5 Mol-%, enthalten können,
wobei die Koeffizienten x und y unabhängig voneinander Werte größer gleich 1 annehmen und z 0 oder größer gleich 1 ist.

Die Summe aus x+y+z bestimmt den Polymerisationsgrad und damit die Viskosität.

Die Organosiliziumverbindungen (A2) haben eine Viskosität von vorzugsweise mindestens 10 mPas, bevorzugt von mindestens 100 mPas, besonders bevorzugt von mindestens 500 mPas (jeweils gemessen bei 25°C und einem Schergefälle von 10/s) und vorzugsweise von höchstens 1 000 000 mPas, bevorzugt vonhöchstens 50 000 mPas, insbesondere von höchstens 5 000 mPas (jeweils gemessen bei 25°C und einem Schergefälle von 10/s).

Die Organosiliziumverbindungen (A1) und (A2) sind handelsübliche Produkte bzw. können nach beliebigen, in der siliziumorganischen Chemie bisher bekannten Methoden hergestellt werden, wie z.B. durch Cohydrolyse der entsprechenden Silane.

Die erfindungsgemäßen Entschäumerzusammensetzungen enthalten vorzugsweise 30-95 Gew.-%, bevorzugt 30-90 Gew.-%, Organosiliziumverbindungen (A1) und (A2).

Die erfindungsgemäßen Zusammensetzungen enthalten Zusatzstoffe (B) in Mengen von bevorzugt 0,1 bis 30 Gewichtsteilen, besonders bevorzugt 1 bis 15 Gewichtsteilen, jeweils bezogen auf 100 Gewichtsteile der Summe der Komponenten (A1) und (A2).

Als erfindungsgemäß eingesetzten Zusatzstoff (B) kann es sich - neben der gegebenenfalls enthaltenen Komponente (B3) - ausschließlich um Komponente (B1), ausschließlich um Komponente (B2) oder eine Mischung aus Komponenten (B1) und (B2) handeln, wobei letzteres bevorzugt ist.

Bei der Komponente (B1) handelt es sich bevorzugt um pulverförmige, insbesondere hydrophobe, Füllstoffe.

Die erfindungsgemäßen Zusammensetzungen enthalten Zusatzstoff (B1) in Mengen von bevorzugt 0,1 bis 30 Gewichtsteilen, besonders bevorzugt 1 bis 15 Gewichtsteilen, insbesondere bevorzugt 2 bis 10 Gewichtsteilen, jeweils bezogen auf 100 Gewichtsteile der Summe der Komponenten (A1) und (A2).

Vorzugsweise weist Komponente (B1) eine BET-Oberfläche von 20 bis 1000 m²/g, eine Partikelgröße von weniger als 10 µm und eine Agglomeratgröße von weniger als 100 µm auf.

Beispiele für die Komponente (B1) sind Siliciumdioxid (Kieselsäuren), Titandioxid, Aluminiumoxid, Metallseifen, Quarzmehl, PTFE-Pulver, Fettsäureamide z. B. Ethylenbisstearamid, fein verteilte hydrophobe Polyurethane.

Vorzugsweise werden als Komponente (B1) Siliciumdioxid (Kieselsäuren), Titandioxid oder Aluminiumoxid, bevorzugt mit einer BET-Oberfläche von 20 bis 1000 m²/g, insbesondere mit einer Partikelgröße von weniger als 10 µm und einer Agglomeratgröße von weniger als 100 µm, eingesetzt.

Besonders bevorzugt als Komponente (B1) sind Kieselsäuren, besonders bevorzugt solche mit einer BET-Oberfläche von 50 bis 800 m²/g, insbesondere solche mit einer BET-Oberfläche von 80 bis 500 m²/g. Diese Kieselsäuren können pyrogene oder gefällte Kieselsäuren sein. Es sind als Komponente (B1) sowohl vorbehandelte Kieselsäuren einsetzbar, also handelsübliche hydrophobe Kieselsäuren, als auch hydrophile Kieselsäuren. Der Grad der Hydrophobierung wird durch die Methanolzahl charakterisiert. Diese wird entsprechend DE 2107082 A1 ermittelt, indem 0,2 g der Kieselsäure in 50 ml Wasser gegeben werden. Unter Rühren wird solange Methanol zugegeben, bis die Kieselsäure komplett benetzt und in der Flüssigkeit suspendiert ist. Die Methanolzahl ist der Prozentsatz an Methanol in dem Flüssigkeitsgemisch, das die Kieselsäure gerade benetzt. Als vorbehandelte hydrophobe Kieselsäuren werden vorzugsweise Kieselsäuren mit einer Methanolzahl von mehr als 30 insbesondere von mehr 50 eingesetzt.

Beispiele für handelsübliche hydrophobe Kieselsäuren, die erfindungsgemäß eingesetzt werden können, sind HDK® H2000, eine pyrogene, mit Hexamethyldisilazanen behandelte Kieselsäure mit einer BET-Oberfläche von 140 m²/g (käuflich erhältlich bei der Wacker-Chemie AG, München, Deutschland) und eine gefällte, mit Polydimethylsiloxan behandelte Kieselsäure mit einer BET-Oberfläche von 90 m²/g (käuflich erhältlich unter der Bezeichnung "Sipernat D10" bei der Evonik Resource Efficiency GmbH, Hanau, Deutschland).

Falls als Komponente (B1) hydrophobe Kieselsäuren eingesetzt werden sollen, können hydrophile Kieselsäuren auch in situ hydrophobiert werden, wenn das für die gewünschte Wirksamkeit der Entschäumerformulierung vorteilhaft ist. Verfahren zur Hydrophobierung von Kieselsäuren sind vielfach bekannt. Die in situ Hydrophobierung der hydrophilen Kieselsäure kann dabei z. B. durch mehrstündiges Erhitzen der in der Komponente (A1) und/oder (A2) oder in einer Mischung aus (A1) und/oder (A2) mit (B2) und/oder (C) dispergierten Kieselsäure auf Temperaturen von 100 bis 200°C erfolgen. Dabei kann die Reaktion durch den Zusatz von Katalysatoren, wie KOH, und von Hydrophobiermitteln, wie kurzkettigen OH-terminierten Polydimethylsiloxanen, Silanen oder Silazanen unterstützt werden. Diese Behandlung ist auch beim Einsatz von handelsüblichen hydrophoben Kieselsäuren möglich und kann zur Wirksamkeitsverbesserung beitragen.

Eine weitere Möglichkeit ist die Verwendung einer Kombination von in situ hydrophobierten Kieselsäuren mit handelsüblichen hydrophoben Kieselsäuren. Dabei werden vorzugsweise je 1 Teil in situ hydrophobierte Kieselsäure 0,2 bis 5 Teile vorbehandelte hydrophobierte Kieselsäure eingesetzt.

Die erfindungsgemäßen Zusammensetzungen enthalten Zusatzstoff (B2) in Mengen von bevorzugt 0,1 bis 30 Gewichtsteilen, besonders bevorzugt 1 bis 15 Gewichtsteilen, insbesondere bevorzugt 2 bis 10 Gewichtsteilen, jeweils bezogen auf 100 Gewichtsteile der Summe der Komponenten (A1) und (A2).

Bei der erfindungsgemäß gegebenenfalls eingesetzten Komponente (B2) handelt es sich bevorzugt um Siliconharze aus Einheiten der Formel (III), bei denen in weniger als 30%, bevorzugt in weniger als 5%, der Einheiten im Harz die Summe d+e gleich 2 ist.

Besonders bevorzugt handelt es sich bei Komponente (B2) um Organopolysiloxanharze, die im Wesentlichen aus R³₃SiO_{1/2} (M)- und SiO_{4/2}(Q)-Einheiten bestehen mit R³ gleich der obengenannten Bedeutung, wobei diese Harze auch als MQ-Harze bezeichnet werden. Das molare Verhältnis von M- zu Q-Einheiten liegt vorzugsweise im Bereich von 0,5 bis 2,0, besonders bevorzugt im Bereich von 0,6 bis 1,0. Diese Siliconharze können außerdem bis zu 10 Gew.-% freie Hydroxy- oder Alkoxygruppen (OR⁴) enthalten. Beispiele für Rest R³ sind das Wasserstoffatom und die für Rest R und R² angegebenen Reste.

Vorzugsweise handelt es sich beim Rest R³ um einen einwertigen, gegebenenfalls substituierten Kohlenwasserstoffrest mit 1 bis 30 Kohlenstoffatomen, bevorzugt um einen einwertigen Kohlenwasserstoffrest mit 1 bis 6 Kohlenstoffatomen, insbesondere um den Methylrest.

Beispiele für Rest R⁴ sind die für den Rest R¹ angegebenen Reste.

Bevorzugt handelt es sich beim Rest R⁴ um ein Wasserstoffatom oder um einen einwertigen Kohlenwasserstoffrest mit 1 bis 4 Kohlenstoffatomen, insbesondere um ein Wasserstoffatom oder um den Methyl- oder Ethylrest.

Bevorzugt ist der Wert für d gleich 3 oder 0.

Vorzugsweise haben die Organopolysiloxanharze (B2) eine Viskosität von größer als 1000 mPas (gemessen bei 25°C und einem Schergefälle von 10/s) oder sind Feststoffe. Das mit Gelpermeationschromatografie bestimmte gewichtsmittlere Molekulargewicht (bezogen auf einen Polystyrolstandard) dieser Harze beträgt vorzugsweise 200 bis 200 000 g/mol, insbesondere 1000 bis 20 000 g/mol.

Bevorzugt sind die erfindungsgemäß eingesetzten Organopolysiloxanharze (B2) in Benzol bei einer Temperatur von 25°C und einem Druck von 101,325 kPa zu mindestens 100g/l löslich.

Komponente (B2) sind handelsübliche Produkte bzw. können nach in der Siliziumchemie gängigen Verfahren z.B. gemäß EP-A 927 733 hergestellt werden.

Falls es sich bei dem erfindungsgemäß eingesetzten Zusatzstoff (B) um eine Mischung aus Komponenten (B1) und (B2) handelt, ist das Gewichtsverhältnis von (B1) zu (B2) in der Mischung bevorzugt 0,01 bis 50, besonders bevorzugt aus 0,1 bis 7.

Beim dem gegebenenfalls erfindungsgemäß eingesetzten Zusatzstoff (B3) handelt es sich um eine Organosiliziumverbindung, die in Mengen von bevorzugt 1 bis 900 Gewichtsteilen, besonders bevorzugt 2 bis 100 Gewichtsteilen, insbesondere 2 bis 10 Gewichtsteilen, jeweils bezogen auf 100 Gewichtsteile der Summe der Komponenten (A1) und (A2) eingesetzt wird.

Beispiele für Reste R⁵ sind die für Rest R angegebenen Beispiele.

Vorzugsweise handelt es sich beim Rest R⁵ um ein Wasserstoffatom oder um einen einwertigen, gegebenenfalls substituierten, aliphatischen Kohlenwasserstoffrest mit 1 bis 30 Kohlenstoffatomen, bevorzugt um einen einwertigen, aliphatischen Kohlenwasserstoffrest mit 1 bis 4 Kohlenstoffatomen, insbesondere um den Methylrest.

Beispiele für Rest R⁶ sind das Wasserstoffatom und die für Rest R und R² angegebenen Reste.

Vorzugsweise handelt es sich beim Rest R⁶ um ein Wasserstoffatom oder um einen einwertigen, gegebenenfalls substituierten Kohlenwasserstoffrest mit 1 bis 30 Kohlenstoffatomen, bevorzugt um ein Wasserstoffatom oder um einen einwertigen Kohlenwasserstoffrest mit 1 bis 4 Kohlenstoffatomen, insbesondere um den Methyl- oder Ethylrest.

Der Wert von g ist bevorzugt 1, 2 oder 3.

Der Wert von h ist bevorzugt 0 oder 1.

Vorzugsweise sind die gegebenenfalls eingesetzten Organosiliciumverbindungen (B3) Organopolysiloxane bestehend aus Einheiten der Formel (IV).

Die gegebenenfalls eingesetzten Organosiliciumverbindungen (B3) haben eine Viskosität von bevorzugt mindestens 10 mPas (gemessen bei 25°C und einem Schergefälle von 10/s) und von bevorzugt höchstens 1 000 000 mm²/s (gemessen bei 25°C und einem Schergefälle von 0,1/s).

Beispiele für erfindungsgemäß gegebenenfalls eingesetzte Organopolysiloxane (B3) sind solche, die verschieden von den Organopolysiloxanen (A1) und (A2) sind und keine direkt an Silizium gebundenen aromatischen Reste enthalten, wie etwa Polydimethylsiloxane mit Viskositäten von 100 bis 1 000 000 mPa·s bei 25°C. Diese Polydimethylsiloxane können z.B. durch den Einbau von R⁵SiO_{3/2}- oder SiO_{4/2}-Einheiten bis maximal 5% aller Einheiten verzweigt sein, wobei R⁵ die oben dafür angegebene Bedeutung hat. Diese verzweigten oder anvernetzten Siloxane weisen dann viskoelastische Eigenschaften auf.

Bevorzugt handelt es sich bei der gegebenenfalls eingesetzten Komponente (B3) um im Wesentlichen lineare Organopolysiloxane enthaltend Einheiten der Formel (IV), besonders bevorzugt um Polydimethylsiloxane, die mit Silanolgruppen und/oder mit Alkoxygruppen und/oder mit Trimethylsiloxygruppen terminiert sein können.

Als Komponente (B3) können auch Organosiliziumverbindungen enthaltend Bausteine der allgemeinen Formel (IV), worin R⁵ einen Methylrest und R⁶ einen linearen und/oder verzweigten Kohlenwasserstoffrest mit mindestens 6 Kohlenstoffatomen bedeuten, h einen durchschnittlichen Wert von 0,005 bis 0,5 annimmt und die Summe (g+h) einen durchschnittlichen Wert von 1,9 bis 2,1 hat, eingesetzt werden. Derartige Produkte sind beispielsweise durch alkalisch katalysierte Kondensation von silanolterminierten Polydimethylsiloxanen mit einer Viskosität von 50 bis 50 000 mPa·s (jeweils gemessen bei 25°C und einem Schergefälle von 10/s) und aliphatischen Alkoholen mit mehr als 6 Kohlenstoffatomen, wie Isotridecylalkohol, n-Octanol, Stearylalkohol, 4-Ethyl-hexadecanol oder Eicosanol, zugänglich.

Komponente (B3) sind handelsübliche Produkte bzw. können nach in der Siliziumchemie gängigen Verfahren hergestellt werden.

Als gegebenenfalls mitverwendete polyethermodifizierte Siloxane (C) werden vorzugsweise Polyether-Polysiloxan-Copolymere eingesetzt, wobei es lineare oder verzweigte Polymere sein können.

Derartige Polyether-Polysiloxan-Copolymere sind Stand der Technik und dem Fachmann bekannt.

Beispiele für lineare Polyether-Polysiloxan-Copolymere sind solche, bei denen die Polyetherreste seitenständig an lineare Siloxanketten über Kohlenwasserstoffreste, vorzugsweise zweiwertige Kohlenwasserstoffreste, SiC-gebunden sind. Solche lineare Polyether-Polysiloxan-Copolymere sind z. B. in GB 2 350 117 A beschrieben.

Beispiele für verzweigte Polyether-Polysiloxan-Copolymere sind solche, bei denen die Polyetherreste seitenständig an lineare Siloxanketten über Kohlenwasserstoffreste, vorzugsweise zweiwertige Kohlenwasserstoffreste, SiC-gebunden sind und wobei diese linearen Siloxanketten über seitenständige organische Brücken miteinander verbunden.
Beispiele für diese organischen Brücken sind SiC-gebundene lineare oder verzweigte organische Reste, vorzugsweise zweiwertige Kohlenwasserstoffreste, die ein oder mehrere Heteroatome ausgewählt aus der Gruppe der Sauerstoff- und Stickstoffatome enthalten können, wie Alkylenreste, SiC-gebundene Polyetherreste, die über Alkylenreste, an die Siloxanketten gebunden sind, und SiC-gebundene zweiwertige Kohlenwasserstoffreste, wie Alkylenreste, die Polyether- und Urethangruppen enthalten.

Besonders gut geeignet sind verzweigte Polyether-Polysiloxan-Copolymere, wie sie z. B. in EP 1 076 073 A1, EP 1 424 117 A2 oder WO 2006/128624 A1 (incorporated by reference) als Komponente von Entschäumern beschrieben sind.

Bevorzugt werden als verzweigte Polyether-Polysiloxan-Copolymere solche eingesetzt, bei denen die Siloxanketten über seitenständige zweiwertige SiC-gebundene Kohlenwasserstoffreste, die Polyetherreste und Urethangruppen enthalten, miteinander verbunden sind.

Diese Polyether-Polysiloxan-Copolymere und deren Herstellung sind in WO 2006/128624 A1, insbesondere auf Seite 3, Zeile 8 bis Seite 13, Zeile 38, beschrieben (incorporated by reference).

Die Polyether-Polysiloxan-Copolymere (C) können in den erfindungsgemäßen Entschäumerzusammensetzungen vorzugsweise in Mengen von 0 bis 60 Gew.-%, bevorzugt 0 bis 40 Gew.-%, insbesondere 0 bis 10 Gew.%, jeweils bezogen auf das Gesamtgewicht der Entschäumerzusammensetzung, eingesetzt werden.

Außer den Komponenten (A), (B) und gegebenenfalls (C) können die erfindungsgemäßen Entschäumerformulierungen alle weiteren Stoffe enthalten, wie sie auch bisher in Entschäumerformulierungen verwendet worden sind, wie z.B. organische Verbindungen (D), insbesondere wasserunlösliche organische Verbindungen (D).

Unter dem Begriff "wasserunlöslich" soll im Sinne der vorliegenden Erfindung eine Löslichkeit in Wasser bei 25°C und einem Druck von 1013,25 hPa von maximal 2 Gewichtsprozenten verstanden werden.

Bei der gegebenenfalls eingesetzten Komponente (D) handelt es sich besonders bevorzugt um organische Verbindungen mit einem Siedepunkt größer als 100°C, bei dem Druck der umgebenden Atmosphäre, also bei 900 bis 1100 hPa, insbesondere um Verbindungen, die nicht unzersetzt destilliert werden können, insbesondere um solche, ausgewählt aus Mineralölen, nativen Ölen, Isoparaffinen, Polyisobutylenen, Rückständen aus der Oxoalkoholsynthese, Estern niedermolekularer synthetischer Carbonsäuren, wie 2,2,4-Trimethyl-3,3-Pentandioldiisobutyrate, Fettsäureestern, wie z.B. Octylstearat und Dodecylpalmitat, Fettalkoholen, Ethern niedermolekularer Alkohole, Phthalaten, Glycole, wie 1,2-Propandiol, Glycolether, Polyethylenglycole, Polyethylenglycolether und/oder Polypropylenglycolether von linearen oder verzweigten Alkoholen mit 3-30 Kohlenstoffatomen, Polyethylenglycolester und/oder Polypropylenglycolester von Carbonsäuren mit 3-30 Kohlenstoffatomen, Estern der Phosphorsäure und Wachsen.

Die organischen Verbindungen (D) können in den erfindungsgemäßen Entschäumerzusammensetzungen vorzugsweise in Mengen von 0 bis 60 Gew.-%, bevorzugt 0 bis 20 Gew.-%, besonders bevorzugt 3 bis 20 Gew.-%, jeweils bezogen auf das Gesamtgewicht der Entschäumerzusammensetzungen eingesetzt werden.

Die erfindungsgemäßen Zusammensetzungen können Wasser (E) enthalten. Beispiele für Wasser (E) sind natürliche Wässer, wie z.B. Regenwasser, Grundwasser, Quellwasser, Flusswasser und Meerwasser, chemische Wässer, wie z.B. vollentsalztes Wasser, destilliertes oder (mehrfach) redestilliertes Wasser, Wässer für medizinische oder pharmazeutische Zwecke, wie z.B. gereinigtes Wasser (Aqua purificata; Pharm. Eur. 3), Aqua deionisata, Aqua destillata, Aqua bidestillata, Aqua ad injectionam oder Aqua conservata, Trinkwasser nach deutscher Trinkwasserverordnung und Mineralwässer.

Wasser (E) kann in den erfindungsgemäßen Entschäumerzusammensetzungen vorzugsweise in Mengen von 0 bis 90 Gew.-%, bevorzugt 0 bis 10 Gew.-%, besonders bevorzugt 0 bis 5 Gew.-%, insbesondere 0 bis 1 Gew.-%, jeweils bezogen auf das Gesamtgewicht der Entschäumerzusammensetzungen, eingesetzt werden.

Die erfindungsgemäßen Entschäumerzusammensetzungen enthalten bevorzugt kein Wasser (E), d.h. bevorzugt ist die Mitverwendung von Wasser ausgeschlossen.

Als Additive (F) könne alle bekannten Additive ausgewählt aus organischen verdickend wirkenden Polymeren, Konservierungsmitteln, Farbstoffen und Duftstoffen verwendet werden. Weiterhin können alkalische oder saure Katalysatoren mitverwendet werden.
Beispiele für alkalische Katalysatoren sind Alkali- und Erdalkalihydroxide, wie NaOH, KOH, CsOH, LiOH und Ca(OH)₂. Beispiele für saure Katalysatoren sind Salzsäure, Schwefelsäure und Phosphornitridchloride.

Die Dosierung der Katalysatoren kann in typischen organischen Lösemitteln wie Alkoholen (wie z.B. Methanol, Ethanol, Isopropanol), in Estern (wie z.B. Essigsäureethylester), in Wasser oder auch in Organopolysiloxanen (B3) erfolgen.

Die erfindungsgemäßen Entschäumerzusammensetzungen bestehen bevorzugt aus
10 bis 60 Gew.-% Organosiliziumverbindungen (A1),
20 bis 70 Gew.-% Organosiliziumverbindungen (A2),
2 bis 15 Gew.-% Zusatzstoffe (B1),
2 bis 15 Gew.-% Zusatzstoffe (B2),
0 bis 15 Gew.-% Zusatzstoffe (B3),
0 bis 10 Gew.-% polyethermodifizierte Siloxane (C)
0 bis 20 Gew.-%, vorzugsweise 3 bis 20 Gew.-%, organische Verbindungen (D)
0 bis 1 Gew.-% Wasser (E), und
0 bis 10 Gew.-% weitere Additive (F),
jeweils bezogen auf das Gesamtgewicht der Entschäumerzusammensetzungen.

Die erfindungsgemäßen Entschäumerzusammensetzungen sind bevorzugt viskose klare bis opake, sowie farblose bis bräunliche Flüssigkeiten.

Die erfindungsgemäßen Entschäumerzusammensetzungen haben eine Viskosität von vorzugsweise 1 bis 20000 mPas, besonders bevorzugt von 5 bis 5000 mPas, jeweils bei 25°C und einem Schergefälle von 50/s.

Bei den erfindungsgemäßen Entschäumerzusammensetzungen kann es sich um Lösungen oder Dispersionen oder Pulver handeln.

Das Herstellen der erfindungsgemäßen Entschäumerzusammensetzungen kann nach bekannten Verfahren, wie z.B. durch Mischen aller Komponenten erfolgen, wie z.B. durch einfaches Rühren mit statischen Mischern oder auch unter Anwendung von hohen Scherkräften in Kolloidmühlen, Dissolvern und Rotor-Stator-Homogenisatoren. Dabei kann der Mischvorgang bei reduziertem Druck erfolgen, um das Einmischen von Luft, welche z.B. in hochdispersen Füllstoffen enthalten ist, zu verhindern. Im Anschluss kann bei Bedarf die in situ Hydrophobierung der Füllstoffe erfolgen.

Die erfindungsgemäßen Entschäumerzusammensetzungen können auch als Emulsionen enthaltend
erfindungsgemäße Entschäumerzusammensetzungen, Emulgatoren und
Wasser
eingesetzt werden,
wobei wässrige Emulsionen nicht bevorzugt sind.

Falls die erfindungsgemäßen Entschäumerzusammensetzungen in Emulsionen enthalten sind, können alle Emulgatoren eingesetzt werden, die dem Fachmann zur Herstellung von Siliconemulsionen bekannt sind, wie z. B. anionische, kationische oder nichtionogene Emulgatoren. Bevorzugt werden Emulgatormischungen eingesetzt, wobei mindestens ein nichtionogener Emulgator, wie z. B. Sorbitanfettsäureester, ethoxylierter Sorbitanfettsäureester, ethoxylierte Fettsäure, ethoxylierter linearer oder verzweigter Alkohol mit 10 bis 20 Kohlenstoffatomen und/oder Glycerinester, enthalten sein sollte. Als anionische Emulgatoren können typische anionische Emulgatoren wie Carboxylate, Sulfate oder Sulfonate, vorzugsweise Sulfate oder Sulfonate wie Salze der α-Sulfofettsäurealkylester, Fettalkoholsulfate, wie beispielsweise Natriumlaurylsulfat, Alkansulfonate, insbesondere sekundäre Alkansulfonate, Alkylbenzolsulfonate, wie beispielsweise Natriumdodecylbenzolsulfonat oder Mischungen daraus, verwendet werden. Weiterhin können als Verdicker bekannte Verbindungen, wie Polyacrylsäure, Polyacrylate, Celluloseether wie Carboxymethylcellulose und Hydroxyethylcellulose, Polyurethane, natürliche Verdicker, wie z. B. Xanthan Gum, sowie Konservierungsmittel und andere übliche und dem Fachmann bekannte Zusätze zugesetzt werden.

Falls die erfindungsgemäßen Entschäumerzusammensetzungen als Emulsionen eingesetzt werden, ist die kontinuierliche Phase bevorzugt Wasser. Es können jedoch auch erfindungsgemäße Entschäumerzusammensetzungen in Form von Emulsionen hergestellt werden, bei denen die kontinuierliche Phase durch die Komponenten (A1) und (A2) und (B1) und (B2) und ggf. (B3) und ggf. (C) und ggf. (F) gebildet werden oder durch Komponente (D) gebildet wird. Es kann sich dabei auch um multiple Emulsionen handeln.

Verfahren zur Herstellung von Siliconemulsionen sind bekannt. Üblicherweise erfolgt die Herstellung durch einfaches Verrühren aller Bestandteile und ggf. anschließendes Homogenisieren mit Strahldispergatoren, Rotor-Stator-Homogenisatoren, Kolloidmühlen oder Hochdruckhomogenisatoren.

Falls es sich bei der erfindungsgemäßen Zusammensetzung um Emulsionen handelt, sind Öl-in-Wasser Emulsionen bevorzugt enthaltend
5 bis 50 Gew.-% erfindungsgemäße Entschäumerzusammensetzungen enthaltend Komponenten (A1), (A2), (B1), (B2), ggf. (B3) und ggf. (C) und ggf. (D) und ggf. (E) und ggf. (F),
1 bis 20 Gew.-% Emulgatoren und ggf. Verdicker und
30 bis 90 Gew.-% Wasser.

Die erfindungsgemäßen Zusammensetzungen können auch als frei fließende Pulver formuliert werden. Diese sind z. B. bei der Anwendung in pulverförmigen Waschmitteln bevorzugt. Die Herstellung dieser Pulver ausgehend von den erfindungsgemäßen Entschäumerzusammensetzungen enthaltend Komponenten (A1), (A2), (B1), (B2) und ggf. (B3) und ggf. (C) und ggf. (D) und ggf. (E) und ggf. (F) erfolgt nach dem Fachmann bekannten Verfahren, wie Sprühtrocknung oder Aufbaugranulation und mit dem Fachmann bekannten Zusätzen.

Gegenstand der Erfindung sind daher Pulver enthaltend erfindungsgemäße Entschäumerzusammensetzungen und Trägermaterialien.

Die erfindungsgemäßen Pulver enthalten bevorzugt 2 bis 20 Gewichts-% der erfindungsgemäßen Entschäumerzusammensetzungen enthaltend die Komponenten (A1), (A2), (B1), (B2) und ggf. (B3) und ggf. (C) und ggf. (D) und ggf. (E) und ggf. (F).

Als Trägermaterialien kommen z. B. Zeolithe, Natriumsulfat, Natriumbicarbonat, Natriumcarbonat, Cellulosederivate, Harnstoff und deren Derivate, und Zucker zum Einsatz. Die erfindungsgemäßen Pulver enthalten 80 bis 98 Gew.-% Trägermaterialien. Weitere Bestandteile der erfindungsgemäßen Pulver können z. B. Wachse sein oder organische Polymere, wie sie z. B. in EP-A 887097 und EP-A 1060778 beschrieben sind.

Ein weiterer Gegenstand der vorliegenden Erfindung sind Tensidformulierungen, vorzugsweise Wasch- und Reinigungsmittel, bevorzugt Flüssigwaschmittel, enthaltend die erfindungsgemäßen Entschäumerzusammensetzungen oder die erfindungsgemäßen Entschäumerzusammensetzungen in Form von Emulsionen oder in Form von Pulvern.

Die erfindungsgemäßen Entschäumerzusammensetzungen können überall eingesetzt werden, wo Entschäumerzusammensetzungen auf der Basis von Organosiliciumverbindungen auch bisher eingesetzt wurden.

Ein weiterer Gegenstand der vorliegenden Erfindung ist ein Verfahren zum Entschäumen und/oder zur Verhinderung des Schäumens von Medien, indem die erfindungsgemäßen Entschäumerzusammensetzungen oder deren Emulsionen oder Pulver mit den Medien vermischt werden.

Der Zusatz der erfindungsgemäßen Entschäumerzusammensetzungen zu den schäumenden Medien kann direkt erfolgen, in geeigneten Lösungsmitteln, wie Toluol, Xylol, Methylethylketon oder t-Butanol, gelöst, als Pulver oder als Emulsion. Die zur Erzielung der gewünschten Entschäumerwirkung notwendige Menge richtet sich z.B. nach der Art des Mediums, der Temperatur und der auftretenden Turbulenz.

Bevorzugt werden die erfindungsgemäßen Entschäumerzusammensetzungen in Mengen von 0,1 Gew.-ppm bis 1 Gew.-%, insbesondere in Mengen von 1 bis 100 Gew.-ppm, zum anwendungsfertigen schäumenden Medium zugegeben. In konzentrierten Tensidformulierungen wie Flüssigwaschmitteln können die erfindungsgemäßen Zusammensetzungen zu 0,1 bis 20 Gew.-% insbesondere zu 0,5 bis 5 Gew.-% enthalten sein.

Das erfindungsgemäße Verfahren wird bei Temperaturen von bevorzugt -10 bis +150°C, besonders bevorzugt 5 bis 100°C, und dem Druck der umgebenden Atmosphäre, also etwa 900 bis 1100 hPa, durchgeführt. Das erfindungsgemäße Verfahren kann auch bei höheren oder niedrigeren Drücken durchgeführt werden, wie etwa bei 3000 bis 4000 hPa oder 1 bis 10 hPa.

Die erfindungsgemäßen Entschäumerzusammensetzungen können überall dort eingesetzt bzw. das erfindungsgemäße Verfahren dort durchgeführt werden, wo störender Schaum verhindert oder zerstört werden soll. Das ist z.B. in nichtwässrigen Medien, wie bei der Teerdestillation oder der Erdölverarbeitung der Fall sowie in wässrigen Medien. Insbesondere geeignet sind die erfindungsgemäßen Entschäumerzusammensetzungen bzw. das erfindungsgemäße Verfahren zur Bekämpfung von Schaum in wässrigen Medien, wie z.B. in wässrigen Tensidformulierungen, wie die Anwendung in Wasch- und Reinigungsmitteln, die Bekämpfung von Schaum in Abwasseranlagen, bei Textilfärbeverfahren, bei der Erdgaswäsche, in Polymerdispersionen, oder zum Entschäumen von bei der Zellstoffherstellung anfallenden wässrigen Medien.

Insbesondere eignen sich die erfindungsgemäßen Entschäumerzusammensetzungen als Bestandteil von Flüssigwaschmitteln, wo sie sich durch eine hervorragende Verträglichkeit und Wirksamkeit auszeichnen.

Die erfindungsgemäßen Zusammensetzungen haben den Vorteil, dass sie als Entschäumer leicht handhabbar sind, mit konzentrierten Tensidformulierungen mischbar sind, und dass sie sich durch eine hohe, lang anhaltende Wirksamkeit in unterschiedlichsten Medien bei geringen Zusatzmengen auszeichnen. Das ist sowohl ökonomisch als auch ökologisch außerordentlich vorteilhaft.

Das erfindungsgemäße Verfahren hat den Vorteil, dass es einfach in der Durchführung und sehr wirtschaftlich ist.

Die Bestimmung der Viskosität der einzelnen Komponenten, insbesondere Komponenten (A1) und (A2) erfolgt gemäß DIN 53019-1 (2008-09)(Grundlagen und Messgeometrie), DIN 53019-2 (2001-2) (Viskosimeterkalibrierung und die Ermittlung der Messunsicherheit)und DIN 53019-3 (2008-09) (Messabweichungen und Korrektionen) bzw. gemäß DIN EN ISO 3219 (1994)(Kunststoffe - Polymere/Harze in flüssigem, emulgiertem oder dispergiertem Zustand - Bestimmung der Viskosität mit einem Rotationsviskosimeter bei definiertem Geschwindigkeitsgefälle) mit einem Kegel-Platte-Viskosimeter MCR 300 (Paar-Physika) bei 25°C und einem Schergefälle wie entsprechend angegeben. Die Bestimmung der Viskosität der Entschäumerzusammensetzungen erfolgt gemäß DIN EN ISO 3219 mit einem Kegel-Platte-Viskosimeter MCR 300 (Paar-Physika) bei 25°C und einem Schergefälle von 50/s.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1000 hPa, und bei Raumtemperatur, also etwa 20°C bzw. einer Temperatur, die sich beim Zusammengeben der Reaktanten bei Raumtemperatur ohne zusätzliche Heizung oder Kühlung einstellt, durchgeführt.

Im Folgenden werden die Strukturen der eingesetzten Phenylsiloxane mit ²⁹Si-NMR Angaben in Mol-% ermittelt.

Im Folgenden werden die Abkürzungen Me gleich Methylrest und Ph gleich Phenylrest verwendet.

### (Vergleichs-)Entschäumerformulierung F1

88 Teile eines Siliconöls (Komponente (A2)) mit einer Viskosität von 1000 mPas (gemessen bei 25°C und einem Schergefälle von 10/s), das laut ²⁹Si-NMR aus folgenden Bausteinen besteht:

| | |
|---|---|
| Me₃SiO_{(1/2)} | 2,9% |
| Me₂SiO_{(2/2)} | 34,7% |
| Me₂Si (OH) O_{(1/2)} | 0,4% |
| PhSi (Me) O_{(2/2)} | 61,0% |
| PhSiO_{(3/2)} | 1,0% |

(erhältlich unter dem Namen Siliconöl AP 1000 bei der Wacker Chemie AG München), 5 Teile einer pyrogenen Kieselsäure mit einer BET-Oberfläche von 300 m²/g (erhältlich unter dem Namen HDK® T30 bei der Wacker Chemie AG München), 5 Teile eines Kohlenwasserstoffgemisch mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz hatte eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde eine Entschäumerformulierung mit einer Viskosität von 3000 mPas erhalten.

### (Vergleichs-)Entschäumerformulierung F2

88 Teile eines flüssigen Siliconharzes (Komponente (A1)) mit einer Viskosität von 140 mPas (gemessen bei 25°C und einem Schergefälle von 10/s), das laut ²⁹Si-NMR aus folgenden Bausteinen besteht:

| | |
|---|---|
| Me₂SiO(_{2/2}) | 33,0% |
| Me₂Si(OR)O_{(1/2)} | 4,5% |
| Ph(OR)SiO_{(2/2)} | 28,8% |
| Ph(OR)₂SiO_{(1/2)} | 11,5% |
| PhSiO_{(3/2)} | 22,2% |

wobei R eine Mischung aus Methyl- und
n-Butylrest ist,
(erhältlich unter dem Namen SILRES® SY 231 bei der Wacker Chemie AG München), 5 Teile einer pyrogenen Kieselsäure mit einer BET-Oberfläche von 300 m²/g (erhältlich unter dem Namen HDK® T30 bei der Wacker Chemie AG München), 5 Teile eines Kohlenwasserstoffgemisch mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz hatte eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt.

### (erfindungsgemäße) Entschäumerformulierung F3

42,5 Teile eines Siliconöls AP 1000 (Komponente (A2)) vom Beispiel F1, 42,5 Teile eines flüssigen Siliconharzes (Komponente (A1)) von Beispiel F2, 5 Teile einer pyrogenen Kieselsäure mit einer BET-Oberfläche von 300 m²/g (erhältlich unter dem Namen HDK® T30 bei der Wacker Chemie AG München), 5 Teile eines Kohlenwasserstoffgemisch mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz hatte eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt. Es wurde eine Entschäumerformulierung mit einer Viskosität von 1980 mPas erhalten.

### Messaufbau zur Prüfung der Entschäumerwirksamkeit

500 ml vollentsalztes Wasser werden mit 1,00 g der entsprechenden Waschmittelformulierung W1 oder W2 versetzt und in einem 1-Liter-Messzylinder gegeben. Mithilfe eines Thermostats wird die Mischung auf 25°C temperiert. Nach Zugabe von 0,1 ml einer 10 Gew.-%igen Formulierung der jeweiligen Entschäumerformulierung (F1) bis (F3) in Ethylmethylketon wird die Waschmittellösung mitsamt der Entschäumerformulierung mit einer Pumpleistung von 150 Liter/Stunde umgepumpt. Es wird die Zeit t zwischen dem Beginn des Testes und dem Zeitpunkt, wenn der Schaum auf 90 mm gestiegen war, gemessen. Angegeben wird jeweils der Mittelwert dreier Messungen.

### Herstellung der Waschmittelformulierung W1:

65,09 g vollentsalztes Wasser werden vorgelegt und mit 10,90 g eines alkoxylierten Fettalkohols (erhältlich unter dem Namen Lutensol® TO 8 bei der BASF SE) unter kräftigem Rühren versetzt. 8,70 g Natriumdodecylbenzolsulfonat (erhältlich als technische Ware bei Fa. Aldrich) und 7,70 g Natriumdodecylsulfat (erhältlich als 90% Ware bei Fa. Aldrich) wurden hinzugefügt und kurz verrührt. 5,61 g 1,2-Propandiol (erhältlich bei Fa. Merck) werden eingemischt. Zum Schluss werden 1,00 g Natriumcitrat tribasisch Dihydrat (erhältlich bei Fa. Aldrich) eingerührt bis alles gelöst ist.

### Herstellung der Waschmittelformulierung W2:

65,09 g vollentsalztes Wasser werden vorgelegt und mit 6,50 g eines alkoxylierten Fettalkohols (erhältlich unter dem Namen Lutensol® TO 8 bei der BASF SE) unter kräftigem Rühren versetzt. 10,90 g Natriumdodecylbenzolsulfonat (erhältlich als technische Ware bei Fa. Aldrich) und 10,90 g Natriumdodecylsulfat (erhältlich als 90% Ware bei Fa. Aldrich) wurden hinzugefügt und kurz verrührt. 5,61 g 1,2-Propandiol (erhältlich bei Fa. Merck) werden eingemischt. Zum Schluss werden 1,00 g Natriumcitrat tribasisch Dihydrat (erhältlich bei Fa. Aldrich) eingerührt bis alles gelöst ist.

### Entschäumerwirksamkeit

**Tabelle 1: Verwendung der Waschmittelformulierung W1:**

| Vergleichsversuche und Beispiel | Zeitraum t in Sekunden |
|---|---|
| (Vergleichs-) Entschäumerformulierung F1 | 330 |
| (Vergleichs-) Entschäumerformulierung F2 | 260 |
| (erfindungsgemäße) Entschäumerformulierung F3 | 435 |

**Tabelle 2: Verwendung der Waschmittelformulierung W2 (höherer Anteil an anionischem Tensid):**

| Vergleichsversuche und Beispiel | Zeitraum t in Sekunden |
|---|---|
| (Vergleichs-) Entschäumerformulierung F1 | 247 |
| (Vergleichs-) Entschäumerformulierung F2 | 230 |
| (erfindungsgemäße) Entschäumerformulierung F3 | 296 |

In beiden Waschmittelformulierungen kann durch die Entschäumerformulierung, in der Phenylöl (Komponente (A2)) und Phenylharz (Komponente (A1)) gemeinsam verwendet werden, gegenüber den Entschäumerformulierungen, in denen das Phenylöl oder das Phenylharz allein verwendet werden, eine Steigerung der Entschäumerwirkung insbesondere der Wirkungsdauer erreicht werden.

### (erfindungsgemäße) pulverförmige Entschäumerformulierung F4

In einem Becherglas werden 30,0 g Soda leicht, 172,5 g Natriumsulfat, 22,5 g einer nativen Cellulose wie z.B. Arbocel UFC M8 (käuflich erhältlich bei der Fa. Rettenmaier & Söhne) sowie 30,0 g Natriumcitrat vorgelegt und unter intensivem Mischen mit einem Flügelrührer miteinander gemischt. 45,2 g der Entschäumerformulierung F3 werden unter intensivem Rühren langsam zugegeben. Es wurde ein weißes, rieselfähiges Pulver erhalten.

### Prüfungen der Entschäumerwirksamkeit in der Waschmaschine

Zu 130 g eines Waschpulvers ECE-2 der Firma WFK wurde eine bestimmte Menge (siehe Tabelle 3) an Entschäumerformulierung gegeben. Das Waschpulver wurde dann gemeinsam mit 3500 g sauberer Baumwollwäsche in eine Trommelwaschmaschine (Typ Miele Novotronik W918 ohne Fuzzy Logic) gegeben. Anschließend wird das Waschprogramm gestartet; das Programm läuft bei einer Temperatur von 40°C und einer Wasserhärte von 3°GHab. Die Schaumhöhe wird über einen Zeitraum von 55 Minuten aufgezeichnet. Aus den über den Gesamtzeitraum ermittelten Schaumnoten (0% kein Schaum messbar bis 100% Überschäumen) wird die durchschnittliche Schaumnote bestimmt. Je niedriger diese ist, desto wirksamer ist die Entschäumerformulierung über den gesamten Zeitraum.

### Entschäumerwirksamkeit

**Tabelle 3: Entschäumerwirkung von 0,05 g Entschäumerformulierung pro 100 g Waschpulver in einer Waschmaschine:**

| Entschäumerformulierung | durchschnittliche Schaumnote |
|---|---|
| F4 | 13% |

Die Entschäumerformulierung F4 weist über den gesamten Waschzeitraum eine exzellente Antischaumwirkung auf.

### (erfindungsgemäße) Entschäumerformulierung F5

Entschäumerformulierung F5 wurde wie analog F3 hergestellt, nur dass ein Verhältnis von 60 Teilen Siliconöl AP 1000 (Komponente (A2)) von Beispiel F1 und 25 Teilen Siliconharz SILRES® SY 231 (Komponente (A1)) von Beispiel F2 eingesetzt wurden.

### (erfindungsgemäße) Entschäumerformulierung F6

42,0 Teile eines Siliconöls AP 1000 (Komponente (A2)) vom Beispiel F1, 42,0 Teile eines flüssigen Siliconharzes (Komponente (A1)) von Beispiel F2, 2,0 Teile einer pyrogenen Kieselsäure mit einer BET-Oberfläche von 300 m²/g (erhältlich unter dem Namen HDK® T30 bei der Wacker Chemie AG München), 4,0 Teile einer pyrogenen mit Hexamethyldisilazanen behandelten Kieselsäure mit einer BET-Oberfläche von 140 m²/g (käuflich erhältlich bei der Wacker-Chemie AG, München, Deutschland unter der Bezeichnung HDK® H2000), 5,0 Teile eines Kohlenwasserstoffgemisch mit einem Siedebereich von 235-270°C (käuflich erhältlich unter der Bezeichnung Exxsol D 100 S bei Staub & Co Nürnberg, Deutschland), 5 Teile eines bei Raumtemperatur festen Siliconharzes bestehend aus folgenden Einheiten (nach ²⁹Si-NMR und IR-Analyse) : 40 mol-% CH₃SiO_{1/2}-, 50 mol-% SiO_{4/2}-, 8 mol-% C₂H₅OSiO_{3/2}- und 2 mol-% HOSiO_{3/2}-, wobei dieses Harz hatte eine gewichtsmittlere Molmasse von 7900g/mol (bezogen auf Polystyrolstandard) hat, und 0,7 Teile einer 20 Gew.-%igen methanolischen KOH wurden mit einem Dissolver vermischt und 4 Stunden auf 150°C erhitzt.

### Herstellung der Waschmittelformulierung W3:

168,40g eines alkoxylierten Fettalkohols (erhältlich unter dem Namen Lutensol® AO 8 bei der BASF SE) wurden bei 50°C geschmolzen. 30,88g Laurinsäure und 7,02g Kaliumhydroxid wurden hinzugefügt und kurz verrührt, anschließend wurden 462,52g vollentsalztes Wasser mit einer Temperatur von 50°C zugegeben und vermischt. Nachdem alles homogen gelöst war, wurden 190,85g eines Na-C14-17 Alkylsulphonates (erhältlich unter dem Namen Hostapur SAS 60 bei der Clariant International Ltd.), 28,07g Natriumtetraborat und 56,13g Natriumcitrat eingerührt bis alles gelöst ist. Zum Schluss wurden noch 56,13g 1,2-Propandiol eingemischt.

### Prüfungen der Entschäumerwirksamkeit in der Waschmaschine

100 g der die Entschäumerformulierung enthaltenden Waschmittelformulierung W3 wurde in obige Trommelwaschmaschine gegeben, ein Waschprogramm wurde wie beschrieben gestartet und die Schaumentwicklung wie beschrieben aufgezeichnet. Die Entschäumerformulierungen F5 und F6 werden jeweils als 10%-ige Formulierungen in Ethylhexylstearat (erhältlich unter dem Namen Tegosoft OS bei der Fa. Evonik) dazugegeben.

### Entschäumerwirksamkeit

**Tabelle 4: Entschäumerwirkung von 0,025 g Entschäumerformulierung pro 100 g Waschmittelformulierung W3 in einer Waschmaschine:**

| Entschäumerformulierung | durchschnittliche Schaumnote |
|---|---|
| F5 | 3% |
| F6 | 9% |

Die erfindungsgemäßen Entschäumerformulierungen F5 und F6 zeigen auch in einer sehr niedrigen Dosierung ausgezeichnete Entschäumerwirkung in flüssigen Tensidsystemen.

## Patentansprüche

1. Entschäumerzusammensetzungen enthaltend
(A1) Organosiliziumverbindungen enthaltend Einheiten der Formel
Rₐ(R¹O)_{b}R²_{c}SiO_{(4-a-b-c)/2} (I),
worin
R gleich oder verschieden sein kann und ein Wasserstoffatom oder einen einwertigen, SiC-gebundenen, gegebenenfalls substituierten, aliphatischen oder über aliphatische Gruppen an das Siliziumatom gebundenen aromatischen Kohlenwasserstoffrest bedeutet,
R¹ gleich oder verschieden sein kann und ein Wasserstoffatom oder einen einwertigen, gegebenenfalls substituierten Kohlenwasserstoffrest bedeutet,
R² gleich oder verschieden sein kann und einen einwertigen, gegebenenfalls substituierten, aromatischen Kohlenwasserstoffrest, der über ein Ringkohlenstoffatom an das Siliziumatom angebunden ist, bedeutet,
a 0, 1, 2 oder 3 ist,
b 0, 1, 2 oder 3 ist und
c 0 oder 1 ist,
mit der Maßgabe, dass
- die Summe a+b+c kleiner oder gleich 3 ist,
- in höchstens 80 %, vorzugsweise höchstens 70 %, aller Einheiten der Formel (I) die Summe a+c gleich 2 ist
- in mindestens 20%, vorzugsweise mindestens 30%, aller Einheiten der Formel (I) die Summe a+c gleich 1 ist und
- in mehr als 10 %, vorzugsweise mehr als 20%, bevorzugt mehr als 40%, aller Einheiten c gleich 1 ist,
(A2) Organosiliziumverbindungen enthaltend Einheiten der Formel
R_{a'}(R¹O)_{b'}R²_{c'}SiO_{(4-a'-b'-c)/2} (II),
worin
R, R¹ und R² die oben dafür angegebene Bedeutung haben,
a' 0, 1, 2 oder 3 ist,
b' 0, 1, 2 oder 3 ist und
c' 0, 1, 2 oder 3 ist,
mit der Maßgabe, dass
- die Summe a'+b'+c' kleiner oder gleich 3 ist,
- in mehr als 80 %, bevorzugt in mehr als 90% aller Einheiten der Formel (II) die Summe a'+c' gleich 2 ist,
- in höchstens 10 %, bevorzugt höchstens 5%, aller Einheiten der Formel (II) die Summe a'+c' gleich 1 ist und,
- in 1-100 %, vorzugsweise in 10-85 %, aller Einheiten der Formel (II) c' verschieden 0 ist,
(B) Zusatzstoffe
ausgewählt aus
(B1) Füllstoffpartikeln und/oder
(B2) Organopolysiloxanharzen bestehend aus Einheiten der Formel
R³_{d}(R⁴O)ₑSiO_{(4-d-e)/2} (III),
worin
R³ gleich oder verschieden sein kann und ein Wasserstoffatom oder einen einwertigen, gegebenenfalls substituierten, SiC-gebundenen Kohlenwasserstoffrest bedeutet,
R⁴ gleich oder verschieden sein kann und ein Wasserstoffatom oder einen einwertigen, gegebenenfalls substituierten Kohlenwasserstoffrest bedeutet,
d 0, 1, 2 oder 3 ist und
e 0, 1, 2 oder 3 ist,
mit der Maßgabe, dass die Summe d+e kleiner oder gleich 3 ist und in weniger als 50 % aller Einheiten der Formel (III) im Organopolysiloxanharz die Summe d+e gleich 2 ist,
und gegebenenfalls
(B3) Organosiliziumverbindungen, welche verschieden von (A1) und (A2) sind und Einheiten der Formel
R⁵_{g}(R⁶O)ₕSiO_{(4-g-h)/2} (IV),
enthalten, worin
R⁵ gleich oder verschieden sein kann und eine für R angegebene Bedeutung hat,
R⁶ gleich oder verschieden sein kann und eine für R¹ angegebene Bedeutung hat,
g 0, 1, 2 oder 3 ist und
h 0, 1, 2 oder 3 ist,
mit der Maßgabe, dass die Summe g+h kleiner oder gleich 3 ist und in mindestens 50 % aller Einheiten der Formel (IV) in der Organosiliziumverbindung die Summe g+h gleich 2 ist,
gegebenenfalls
(C) polyethermodifizierte Siloxane,
gegebenenfalls
(D) organische Verbindungen,
gegebenenfalls
(E) Wasser und
gegebenenfalls
(F) weitere Additive.

2. Entschäumerzusammensetzungen nach Anspruch 1, **dadurch gekennzeichnet, dass** R ein einwertiger aliphatischer Kohlenwasserstoffrest mit 1 bis 4 Kohlenstoffatomen, bevorzugt ein Methylrest oder ein n-Propylrest, ist und R¹ ein Wasserstoffatom oder einen einwertigen Kohlenwasserstoffrest mit 1 bis 4 Kohlenstoffatomen, bevorzugt ein Wasserstoffatom oder ein Methylrest, ist.

3. Entschäumerzusammensetzungen nach Anspruch 1 oder 2, **dadurch gekennzeichnet, dass** R² ein Arylrest, bevorzugt ein Phenylrest, ist.

4. Entschäumerzusammensetzungen nach Anspruch 1, 2 oder 3, **dadurch gekennzeichnet, dass** 10 bis 100 Mol-% der SiC-gebundenen Reste in den Komponenten (A1) und (A2) Reste R² sind.

5. Entschäumerzusammensetzungen nach einem der Ansprüche 1 bis 4, **dadurch gekennzeichnet, dass** als Organosiliciumverbindungen (A1) Siliconharze der Formeln
(R²SiO_{3/2})ₖ(R₂SiO)ₗ,
(R²SiO_{3/2})ₖ(R₂SiO)ₗ(R²(R¹O)SiO_{2/2})ₘ,
(R²SiO_{3/2})ₖ(R₂SiO)ₗ(R²(R¹O)SiO_{2/2})ₘ(R²(R¹O)₂SiO_{1/2})ₙ
oder
(R²SiO_{3/2})ₖ(R²(R¹O)SiO_{2/2})ₘ,
wobei sie zusätzlich Einheiten ausgewählt aus der Gruppe der Formeln R₃SiO_{1/2} und R₂(R¹O)SiO_{1/2} und deren Mischungen enthalten können,
wobei R, R¹ und R² die im Anspruch 1, 2 oder 3 dafür angegebenen Bedeutung haben, und
die Koeffizienten k, l, m und n unabhängig voneinander Werte größer gleich 1 annehmen,
eingesetzt werden.

6. Entschäumerzusammensetzungen nach einem der Ansprüche 1 bis 5, **dadurch gekennzeichnet, dass** als Organosiliziumverbindungen (A2) Organopolysiloxane der Formel
R₃₋ₚ(R¹O)ₚSiO[R₂SiO]ᵥ[R*R²SiO]_{w}(R¹O)ₚR₃₋ₚ (V),
wobei sie zusätzlich T-Einheiten ausgewählt aus Einheiten der Formeln R²SiO_{3/2}, RSiO_{3/2}, R²(R¹O)SiO_{2/2}, R(R¹O)SiO_{2/2},
R²(R¹O)₂SiO_{1/2}, R(R¹O)₂SiO_{1/2} und deren Mischungen in Mengen von 0 bis 5 Mol-% enthalten können,
wobei R, R¹ und R² die in Anspruch 1, 2 oder 3 dafür angegebene Bedeutung haben,
R* R oder R², vorzugsweise R, bedeutet,
p 0 oder 1 ist,
v 0 oder eine ganze Zahl ist und
w eine ganze Zahl ist,
eingesetzt werden.

7. Entschäumerzusammensetzungen nach Anspruch 5 oder 6, **dadurch gekennzeichnet, dass** 10 bis 100 Mol-% der SiC-gebundenen Reste in den Komponenten (A1) und (A2) Reste R² sind.

8. Entschäumerzusammensetzungen nach einem der Ansprüche 1 bis 7, **dadurch gekennzeichnet, dass** als Komponente (B1) Kieselsäuren mit einer BET-Oberfläche von 50 bis 800 m²/g eingesetzt werden.

9. Entschäumerzusammensetzungen nach einem der Ansprüche 1 bis 8, **dadurch gekennzeichnet, dass** als Komponente (B2) Organopolysiloxanharze, die im Wesentlichen aus R³₃SiO_{1/2} (M) - und SiO_{4/2} (Q) -Einheiten bestehen, wobei R³ die im Anspruch 1 dafür angegebene Bedeutung hat, das molare Verhältnis von M- zu Q-Einheiten im Bereich von 0,5 bis 2,0 liegt und bis zu 10 Gew.-% Si-gebundene Hydroxy- oder Alkoxygruppen enthalten sein können, eingesetzt werden.

10. Entschäumerzusammensetzungen nach einem der Ansprüche 1 bis 9, **dadurch gekennzeichnet, dass** es Entschäumerzusammensetzungen bestehend aus
10 bis 60 Gew.-% Organosiliziumverbindungen (A1),
20 bis 70 Gew.-% Organosiliziumverbindungen (A2),
2 bis 15 Gew.-% Zusatzstoffe (B1),
2 bis 15 Gew.-% Zusatzstoffe (B2),
0 bis 15 Gew.-% Zusatzstoffe (B3),
0 bis 10 Gew.-% polyethermodifizierte Siloxane (C)
0 bis 20 Gew.-% organische Verbindungen (D)
0 bis 1 % Wasser (E), und
0 bis 10% weitere Additive (F),
jeweils bezogen auf das Gesamtgewicht der Entschäumerzusammensetzungen,
sind.

11. Pulver enthaltend Entschäumerzusammensetzungen nach einem der Ansprüche 1 bis 10 und
Trägermaterialien.

12. Tensidformulierungen, vorzugsweise Wasch- oder Reinigungsmittel, enthaltend Entschäumerzusammensetzungen nach einem der Ansprüchen 1 bis 10 oder deren Pulver nach Anspruch 11.

13. Verfahren zum Entschäumen und/oder zur Schaumverhinderung von Medien, **dadurch gekennzeichnet, dass** die Entschäumerzusammensetzungen nach einem der Ansprüchen 1 bis 10 oder deren Pulver nach Anspruch 11 mit den Medien vermischt werden.

14. Verfahren nach Anspruch 13, **dadurch gekennzeichnet, dass** die Entschäumerzusammensetzung in Mengen von 0,1 Gew.-ppm bis 1 Gew.-% zum schäumenden Medium zugegeben wird.

## Claims

1. Defoamer compositions comprising
(A1) organosilicon compounds comprising units of the formula
Rₐ(R¹O)_{b}R²_{c}SiO_{(4-a-b-c)/2} (I),
in which
R may be identical or different and is a hydrogen atom or a monovalent, SiC-bonded, optionally substituted hydrocarbyl radical which is aliphatic or which is aromatic and is bonded via aliphatic groups to the silicon atom,
R¹ may be identical or different and is a hydrogen atom or a monovalent, optionally substituted hydrocarbyl radical,
R² may be identical or different and is a monovalent, optionally substituted, aromatic hydrocarbyl radical which is attached via a ring carbon atom to the silicon atom,
a is 0, 1, 2 or 3,
b is 0, 1, 2 or 3, and
c is 0 or 1,
with the proviso that
- the sum a+b+c is less than or equal to 3,
- in at most 80%, preferably at most 70%, of all units of the formula (I), the sum a+c is 2,
- in at least 20%, preferably at least 30%, of all units of the formula (I), the sum a+c is 1, and
- in more than 10%, preferably more than 20%, more preferably more than 40% of all units, c is 1,
(A2) organosilicon compounds comprising units of the formula
R_{a'}(R¹O)_{b'}R²_{c'}SiO_{(4-a'-b'-c')/2} (II),
in which
R, R¹ and R² have the definition stated for them above,
a' is 0, 1, 2 or 3,
b' is 0, 1, 2 or 3, and
c' is 0, 1, 2 or 3,
with the proviso that
- the sum a'+b'+c' is less than or equal to 3,
- in more than 80%, preferably more than 90%, of all units of the formula (II) the sum a'+c' is 2,
- in at most 10%, preferably at most 5%, of all units of the formula (II) the sum a'+c' is 1, and
- in 1-100%, preferably in 10-85%, of all units of the formula (II) c' is other than 0,
(B) adjuvants
selected from
(B1) filler particles and/or
(B2) organopolysiloxane resins consisting of units of the formula
R³_{d}(R⁴O)ₑSiO_{(4-d-e)/2} (III),
in which
R³ may be identical or different and is a hydrogen atom or a monovalent, optionally substituted, SiC-bonded hydrocarbyl radical,
R⁴ may be identical or different and is a hydrogen atom or a monovalent, optionally substituted hydrocarbyl radical,
d is 0, 1, 2 or 3, and
e is 0, 1, 2 or 3,
with the proviso that the sum d+e is less than or equal to 3 and in less than 50% of all units of the formula (III) in the organopolysiloxane resin, the sum d+e is 2,
and optionally
(B3) organosilicon compounds which are different from (A1) and (A2) and comprise units of the formula
R⁵_{g}(R⁶O)ₕSiO_{(4-g-h)/2} (IV),
in which
R⁵ may be identical or different and has a definition stated for R,
R⁶ may be identical or different and has a definition stated for R¹,
g is 0, 1, 2 or 3, and
h is 0, 1, 2 or 3,
with the proviso that the sum g+h is less than or equal to 3 and in at least 50% of all units of the formula (IV) in the organosilicon compound, the sum g+h is 2,
optionally
(C) polyether-modified siloxanes,
optionally
(D) organic compounds,
optionally
(E) water, and
optionally
(F) further additives.

2. Defoamer compositions according to Claim 1, **characterized in that** R is a monovalent aliphatic hydrocarbyl radical having 1 to 4 carbon atoms, preferably a methyl radical or an n-propyl radical, and
R¹ is a hydrogen atom or a monovalent hydrocarbyl radical having 1 to 4 carbon atoms, preferably a hydrogen atom or a methyl radical.

3. Defoamer compositions according to Claim 1 or 2, **characterized in that** R² is an aryl radical, preferably a phenyl radical.

4. Defoamer compositions according to Claim 1, 2 or 3, **characterized in that** 10 to 100 mol% of the SiC-bonded radicals in components (A1) and (A2) are radicals R².

5. Defoamer compositions according to any of Claims 1 to 4, **characterized in that** use is made as organosilicon compounds (A1) of silicone resins of the formulae
(R²SiO_{3/2})ₖ(R₂SiO)ₗ,
(R²SiO_{3/2})ₖ(R₂SiO)ₗ(R²(R¹O)SiO_{2/2})ₘ,
(R²SiO_{3/2})ₖ(R₂SiO)ₗ(R²(R¹O)SiO_{2/2})ₘ(R²(R¹O)₂SiO_{1/2})ₙ
or
(R²SiO_{3/2})ₖ(R²(R¹O)SiO_{2/2})ₘ,
which may additionally comprise units selected from the group of the formulae R₃SiO_{1/2} and R₂(R¹O)SiO_{1/2} and mixtures thereof,
where R, R¹ and R² have the definition stated for them in claim 1, 2 or 3, and
the coefficients k, l, m and n independently of one another adopt values greater than or equal to 1.

6. Defoamer compositions according to any of Claims 1 to 5, **characterized in that** use is made as organosilicon compounds (A2) of organopolysiloxanes of the formula
R₃₋ₚ(R¹O)pSiO[R₂SiO]ᵥ[R*R²SiO]_{w}(R¹O)ₚR₃₋ₚ (V),
which may additionally contain T units selected from units of the formulae R²SiO_{3/2}, RSiO_{3/2}, R²(R¹O)SiO_{2/2}, R(R¹O)SiO_{2/2}, R²(R¹O)₂SiO_{1/2}, R(R¹O)₂SiO_{1/2} and mixtures thereof in amounts of 0 to 5 mol%,
where R, R¹ and R² have the definition stated for them in claim 1, 2 or 3,
R* is R or R², preferably R,
p is 0 or 1,
v is 0 or an integer, and
w is an integer.

7. Defoamer compositions according to Claim 5 or 6, **characterized in that** 10 to 100 mol% of the SiC-bonded radicals in components (A1) and (A2) are radicals R².

8. Defoamer compositions according to any of Claims 1 to 7, **characterized in that** use is made as component (B1) of silicas having a BET surface area of 50 to 800 m²/g.

9. Defoamer compositions according to any of Claims 1 to 8, **characterized in that** use is made as component (B2) of organopolysiloxane resins which consist essentially of R³₃SiO_{1/2} (M) and SiO_{4/2} (Q) units, where R³ has the definition indicated for it in claim 1, the molar ratio of M to Q units is in the range from 0.5 to 2.0, and up to 10 wt% of Si-bonded hydroxyl or alkoxy groups may be present.

10. Defoamer compositions according to any of Claims 1 to 9, **characterized in that** said defoamer compositions consist of
10 to 60 wt% of organosilicon compounds (A1),
20 to 70 wt% of organosilicon compounds (A2),
2 to 15 wt% of adjuvants (B1),
2 to 15 wt% of adjuvants (B2),
0 to 15 wt% of adjuvants (B3),
0 to 10 wt% of polyether-modified siloxanes (C),
0 to 20 wt% or organic compounds (D),
0 to 1% of water (E), and
0 to 10% of further additives (F),
based in each case on the total weight of the defoamer compositions.

11. Powder comprising defoamer compositions according to any of Claims 1 to 10 and
carrier materials.

12. Surfactant formulations, preferably laundry detergent or cleaning product, comprising defoamer compositions according to any of Claims 1 to 10 or powder thereof according to Claim 11.

13. Method for the defoaming and/or for the prevention of foam in media, **characterized in that** the defoamer compositions according to any of Claims 1 to 10 or powder thereof according to Claim 11 are mixed with the media.

14. Method according to Claim 13, **characterized in that** the defoamer composition is added in amounts of 0.1 ppm by weight to 1 wt% to the foaming medium.

## Revendications

1. Compositions antimousse, contenant :
(A1) des composés d'organosilicium contenant des unités de formule :
Rₐ(R¹O)_{b}R²_{c}SiO_{(4-α-b-c)/2} (I),
dans laquelle
les R peuvent être identiques ou différents, et signifient un atome d'hydrogène ou un radical hydrocarboné monovalent, relié à SiC, éventuellement substitué, aliphatique ou aromatique relié par des groupes aliphatiques à l'atome de silicium,
les R¹ peuvent être identiques ou différents, et signifient un atome d'hydrogène ou un radical hydrocarboné monovalent, éventuellement substitué,
les R² peuvent être identiques ou différents, et signifient un radical hydrocarboné aromatique monovalent, éventuellement substitué, qui est relié par un atome de carbone de cycle à l'atome de silicium,
a signifie 0, 1, 2 ou 3,
b signifie 0, 1, 2 ou 3, et
c signifie 0 ou 1,
à condition que
- la somme a+b+c soit inférieure ou égale à 3,
- dans au plus 80 %, de préférence au plus 70 %, de toutes les unités de formule (I), la somme a+c soit égale à 2,
- dans au moins 20 %, de préférence au moins 30 %, de toutes les unités de formule (I), la somme a+c soit égale à 1, et
- dans plus de 10 %, de préférence plus de 20 %, de préférence plus de 40 %, de toutes les unités, c soit égal à 1,
(A2) des composés d'organosilicium contenant des unités de formule :
R_{a'}(R¹O)_{b'}R²_{c'}SiO_{(4-a'-b'-c')/2} (II),
dans laquelle
R, R¹ et R² ont la signification indiquée précédemment,
a' signifie 0, 1, 2 ou 3,
b' signifie 0, 1, 2 ou 3, et
c' signifie 0, 1, 2 ou 3,
à condition que
- la somme a'+b'+c' soit inférieure ou égale à 3,
- dans plus de 80 %, de préférence dans plus de 90 % de toutes les unités de formule (II), la somme a'+c' soit égale à 2,
- dans au plus 10 %, de préférence au plus 5 %, de toutes les unités de formule (II), la somme a'+c' soit égale à 1, et
- dans 1 à 100 %, de préférence dans 10 à 85 %, de toutes les unités de formule (II), c' soit différent de 0,
(B) des additifs,
choisis parmi :
(B1) les particules de charges et/ou
(B2) les résines d'organopolysiloxane constituées par des unités de formule :
R³_{d}(R⁴O)ₑSiO_{(4-d-e)/2} (III),
dans laquelle
les R³ peuvent être identiques ou différents, et signifient un atome d'hydrogène ou un radical hydrocarboné monovalent, éventuellement substitué,
relié à SiC,
les R⁴ peuvent être identiques ou différents, et signifient un atome d'hydrogène ou un radical hydrocarboné monovalent, éventuellement substitué,
d signifie 0, 1, 2 ou 3, et
e signifie 0, 1, 2 ou 3,
à condition que la somme d+e soit inférieure ou égale à 3 et que dans moins de 50 % de toutes les unités de formule (III) dans la résine d'organopolysiloxane, la somme d+e soit égale à 2,
et éventuellement
(B3) des composés d'organosilicium, qui sont différents de (A1) et (A2), et contiennent des unités de formule :
R⁵_{g}(R⁶O)ₕSiO_{(4-g-h)/2} (IV),
dans laquelle
les R⁵ peuvent être identiques ou différents, et ont une signification indiquée pour R,
les R⁶ peuvent être identiques ou différents, et ont une signification indiquée pour R¹,
g signifie 0, 1, 2 ou 3, et
h signifie 0, 1, 2 ou 3,
à condition que la somme g+h soit inférieure ou égale à 3, et que dans au moins 50 % de toutes les unités de formule (IV) dans le composé d'organosilicium, la somme g+h soit égale à 2,
éventuellement
(C) des siloxanes modifiés par des polyéthers, éventuellement
(D) des composés organiques,
éventuellement
(E) de l'eau et
éventuellement
(F) d'autres additifs.

2. Compositions antimousse selon la revendication 1, **caractérisées en ce que** R est un radical hydrocarboné aliphatique monovalent de 1 à 4 atomes de carbone, de préférence un radical méthyle ou un radical n-propyle, et R¹ est un atome d'hydrogène ou un radical hydrocarboné monovalent de 1 à 4 atomes de carbone, de préférence un atome d'hydrogène ou un radical méthyle.

3. Compositions antimousse selon la revendication 1 ou 2, **caractérisées en ce que** R² est un radical aryle, de préférence un radical phényle.

4. Compositions antimousse selon la revendication 1, 2 ou 3, **caractérisées en ce que** 10 à 100 % en moles des radicaux reliés à SiC dans les composants (A1) et (A2) sont des radicaux R².

5. Compositions antimousse selon l'une quelconque des revendications 1 à 4, **caractérisées en ce que** des résines de silicone des formules
(R²SiO_{3/2})ₖ(R₂SiO)ₗ,
(R²SiO_{3/2})ₖ(R₂SiO)ₗ(R²(R¹O)SiO_{2/2})ₘ,
(R²SiO_{3/2})ₖ(R₂SiO)ₗ(R²(R¹O)SiO_{2/2})ₘ(R²(R¹O)₂SiO_{1/2})ₙ
ou
(R²SiO_{3/2})ₖ(R²(R¹O)SiO_{2/2})ₘ,
sont utilisées en tant que composés d'organosilicium (A1),
des unités choisies dans le groupe constitué par les formules R₃SiO_{1/2} et R₂(R¹O)SiO_{1/2} et leurs mélanges pouvant également être contenues,
R, R¹ et R² ayant la signification indiquée dans la revendication 1, 2 ou 3, et
les coefficients k, l, m et n prenant indépendamment les uns des autres des valeurs supérieures ou égales à 1.

6. Compositions antimousse selon l'une quelconque des revendications 1 à 5, **caractérisées en ce que** des organopolysiloxanes de formule :
R₃₋ₚ(R¹O)ₚSiO[R₂SiO]ᵥ[R*R²SiO]_{w}(R¹O]ₚR₃₋ₚ (V),
sont utilisés en tant que composés d'organosilicium (A2),
des unités T choisies parmi les unités des formules R²SiO_{3/2}, RSiO_{3/2}, R²(R¹O)SiO_{2/2}, R(R¹O)SiO_{2/2}, R²(R¹O)₂SiO_{1/2}, R(R¹O)₂SiO_{1/2} et leurs mélanges pouvant également être contenues en quantités de 0 à 5 % en moles, R, R¹ et R² ayant la signification indiquée dans la revendication 1, 2 ou 3,
R* signifiant R ou R², de préférence R,
p signifiant 0 ou 1,
v signifiant 0 ou un nombre entier, et
w signifiant un nombre entier.

7. Compositions antimousse selon la revendication 5 ou 6, **caractérisées en ce que** 10 à 100 % en moles des radicaux reliés à SiC dans les composants (A1) et (A2) sont des radicaux R².

8. Compositions antimousse selon l'une quelconque des revendications 1 à 7, **caractérisées en ce que** des silices ayant une surface BET de 50 à 800 m²/g sont utilisées en tant que composant (B1).

9. Compositions antimousse selon l'une quelconque des revendications 1 à 8, **caractérisées en ce que** des résines d'organopolysiloxane qui sont essentiellement constituées par des unités R³₃SiO_{1/2} (M) et SiO_{4/2} (Q) sont utilisées en tant que composant (B2), R³ ayant la signification indiquée dans la revendication 1, le rapport molaire entre les unités M et Q se situant dans la plage allant de 0,5 à 2,0, et jusqu'à 10 % en poids de groupes hydroxy ou alcoxy reliés à Si pouvant être contenus.

10. Compositions antimousse selon l'une quelconque des revendications 1 à 9, **caractérisées en ce qu'**il s'agit de compositions antimousse constituées par :
10 à 60 % en poids de composés d'organosilicium (A1),
20 à 70 % en poids de composés d'organosilicium (A2),
2 à 15 % en poids d'additifs (B1),
2 à 15 % en poids d'additifs (B2),
0 à 15 % en poids d'additifs (B3),
0 à 10 % en poids de siloxanes modifiés par des polyéthers (C),
0 à 20 % en poids de composés organiques (D),
0 à 1 % d'eau (E) et
0 à 10 % d'additifs supplémentaires (F),
à chaque fois par rapport au poids total des compositions antimousse.

11. Poudres contenant :
- des compositions antimousse selon l'une quelconque des revendications 1 à 10 et
- des matériaux supports.

12. Formulations tensioactives, de préférence détergents, contenant des compositions antimousse selon l'une quelconque des revendications 1 à 10 ou leurs poudres selon la revendication 11.

13. Procédé de démoussage et/ou d'inhibition du moussage de milieux, **caractérisé en ce que** les compositions antimousse selon l'une quelconque des revendications 1 à 10 ou leurs poudres selon la revendication 11 sont mélangées avec les milieux.

14. Procédé selon la revendication 13, **caractérisé en ce que** la composition antimousse est ajouté au milieu moussant en quantités de 0,1 ppm en poids à 1 % en poids.
